Europäisches Patentamt

European Patent Office

Office européen des brevets

(11) Publication number: **0 208 429**
A2

(12)

# EUROPEAN PATENT APPLICATION

(21) Application number: 86304502.7

(22) Date of filing: 12.06.86

(51) Int. Cl.⁴: **G 06 F 12/02**

(30) Priority: 28.06.85 US 750374

(43) Date of publication of application:
14.01.87 Bulletin 87/3

(84) Designated Contracting States:
CH DE FR GB IT LI NL SE

(71) Applicant: Hewlett-Packard Company
P.O. Box 10301
Palo Alto California 94303-0890(US)

(72) Inventor: Worley, William S.
19316 Falmouth Court
Saratoga California 95070(US)

(72) Inventor: Muchnick, Steven S.
5007 Diamond Heights Blvd
San Francisco California 94131(US)

(72) Inventor: Miller, Terrence C.
169 Oak Court
Menlo Park California 94025(US)

(74) Representative: Colgan, Stephen James et al,
CARPMAELS & RANSFORD 43 Bloomsbury Square
London WC1A 2RA.(GB)

(54) Method and apparatus for addressing a number of address spaces.

(57) A computer system has the ability to access a large number of address spaces using a long pointer or to access a limited number of address spaces using a short pointer comprising a space specifier in a memory reference instruction. The two bit space specifier identifies a space register containing the space identifier of the desired address space. If the space specifier is zero, the upper two bits of a base address specify a space register and the entire base address specifies a specific memory location therein.

EP 0 208 429 A2

./...

FIG 3A

AND APPARATUS
METHOD/FOR ADDRESSING A NUMBER OF ADDRESS SPACES

## Background and Summary of the Invention

The amount of addressable virtual memory available to a computer may be increased by increasing the number of address spaces which are accessible by the computer. Using 32 bit addresses, a 32 bit computer has the ability to access $2^{32}$ distinct virtual memory locations within a given memory space. By using an additional 32 bits as a space identifier, the 32 bit computer has the ability to access $2^{32}$ memory locations in each of $2^{32}$ address spaces for a total of $2^{64}$ addressable virtual memory locations. Unfortunately, such a 64 bit long pointer is difficult to manipulate and its use to access numerous address spaces complicates the hardware and software which is necessary for virtual to physical address conversions.

In accordance with the illustrated preferred embodiment of the present invention, a computer has both the ability to use long pointers when necessary and the ability to use a short pointer to access four address spaces if access to only a few address spaces is required as is the case in most computer programs. Each memory reference instruction includes a two bit space specifier and a base field which identifies a base register containing a base address. If a long pointer is required, a space specifier of 1, 2 or 3 specifies a space register containing the 32 bit space identifier portion of the long pointer. If a long pointer

1

is not required, a space specifier of 0 designates the upper two bits of the base address to select one of space registers 4-7 and the space identifier therein contained. Since the upper two bits of the base address are used to designate an address space, only one quadrant of each of spaces 4 through 7 is directly accessed. A pseudo-space containing one quadrant each from each of the four spaces is therefore created.

## Brief Description of the Drawings

Figure 1 shows a computer system which may be used in accordance with the preferred embodiment of the present invention.

Figure 2 shows bit assignments of a memory reference instruction which may be used in the system of Figure 1.

Figures 3A-3B are a flow chart of the steps performed in accessing a memory location shown in Figure 1.

Figures 4A-4B show various address spaces accessed as shown in the flow chart of Figures 3A-B.

## Detailed Description of the Preferred Embodiment

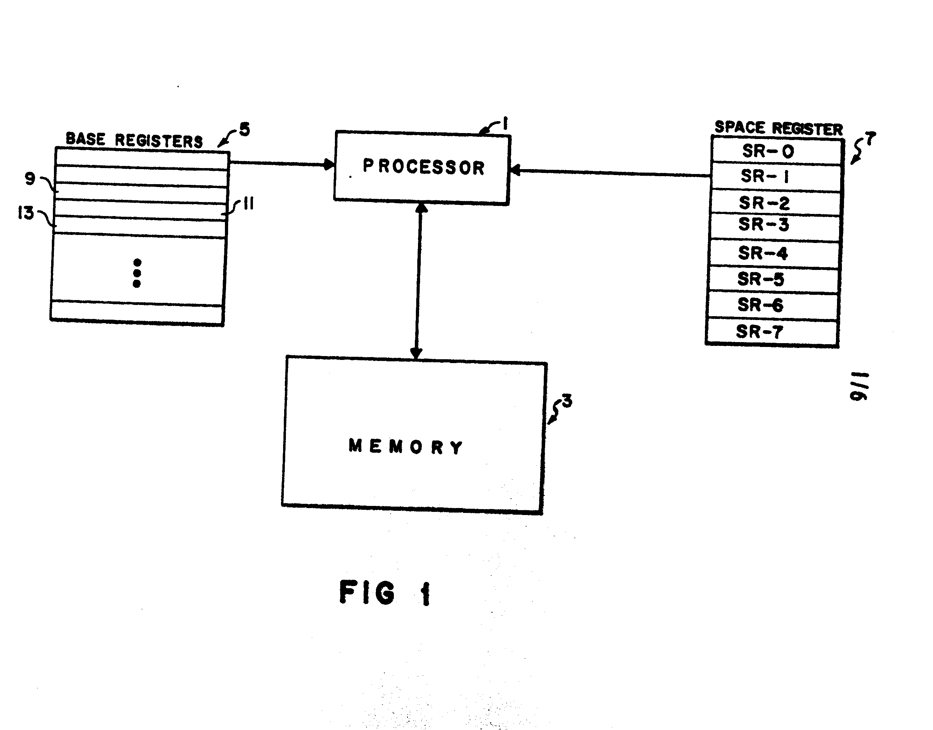

Figure 1 shows a 32 bit computer system which may be used in accordance with the preferred embodiment of the present invention. A processor 1 may receive data and instructions from a memory via a high speed cache memory (not shown). The system includes a number of general registers 5 (including a base register 9 and general registers 11, 13) and eight space registers 7 identified as SR-0 through SR-7.

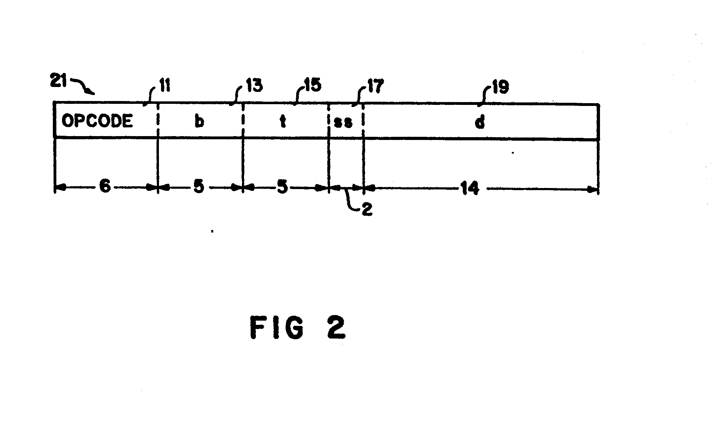

Figure 2 shows a 32 bit memory reference instruction 21 (e.g., LOAD or STORE) which may be used in the system shown in Figure 1 to access a specific memory location in one of a number of address spaces with either a 64 bit long pointer or a short pointer. A 6 bit opcode field 11 identifies the instruction. A 5 bit base field 13 identifies a specific base register 9 containing a base address. A target or source field 15 identifies a register containing a target or source address which may be used as is more completely described in the copending application entitled METHOD FOR EMBEDDING DATA IN AN INSTRUCTION STREAM which was filed on (USSN 750376; HP CASE 3319585; European Appln. No. ) July 28, 1985 by Worley et al and which is incorporated herein by reference. A two bit space specifier 17 (the short pointer) is used as described below to access a specific address space. A 14 bit displacement field 19 may be used as described in the above-referenced U.S. patent application to modify an address.

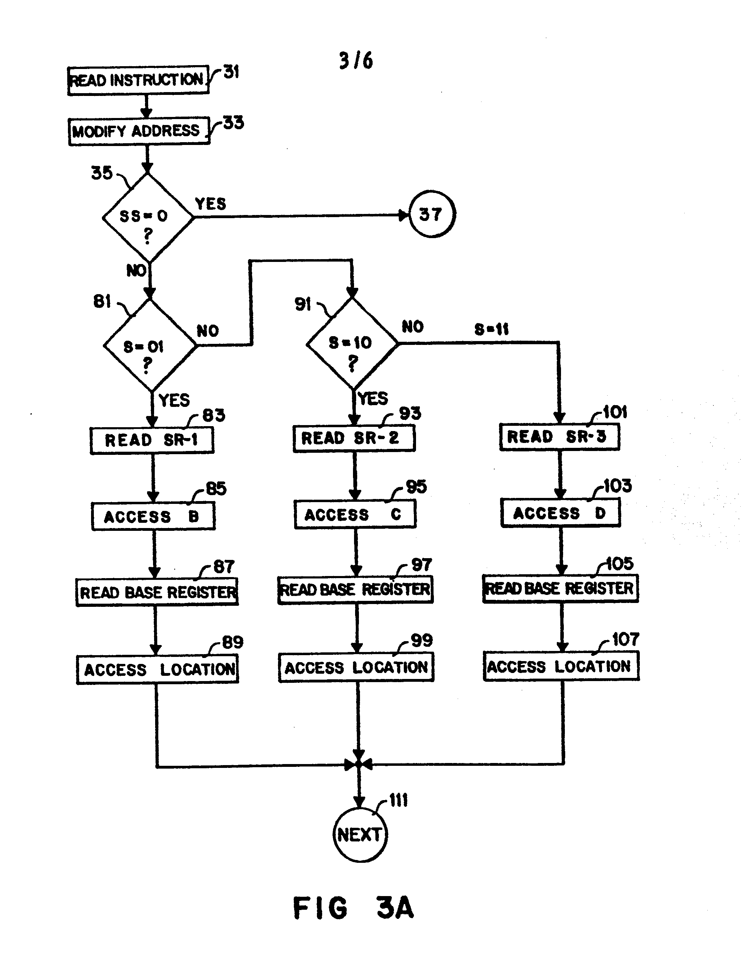

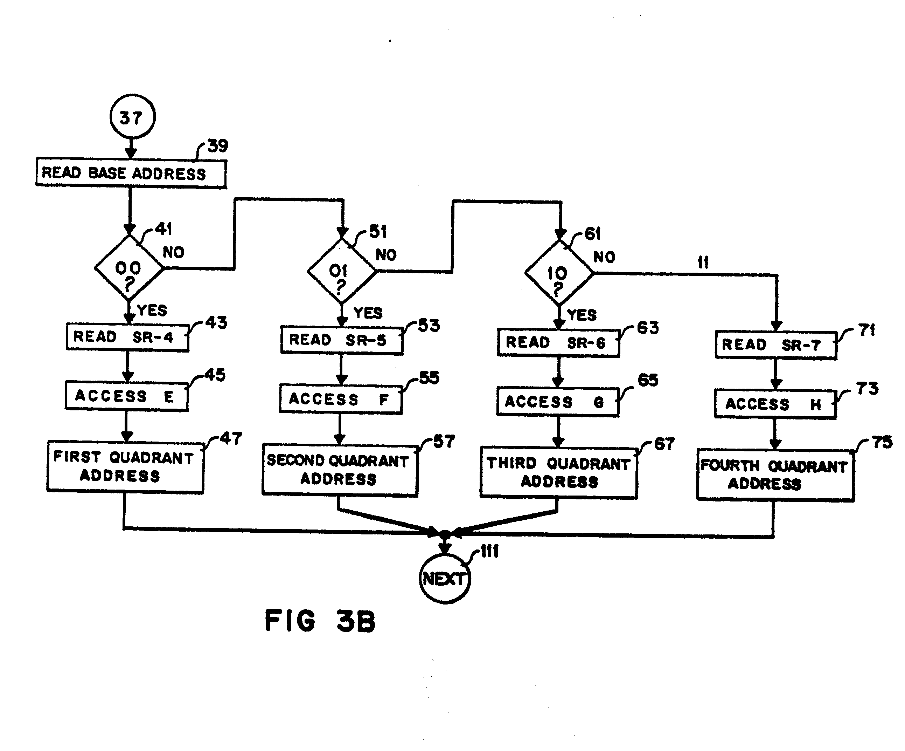

Figures 3A-3B make up a flow chart of the various steps which are performed by the computer system shown in Figure 1 during execution of the instruction 21. In step 31, the memory reference instruction 21 is read and in step 33 an address (e.g., the base address contained in base register 9) may be modified as discussed in the above-referenced Worley et al patent application. In step 35 the two bit space specifier 17 is examined. If ss is nonzero the steps shown in Figure 3A are performed and if ss is equal to zero the steps of Figure 3B are performed.

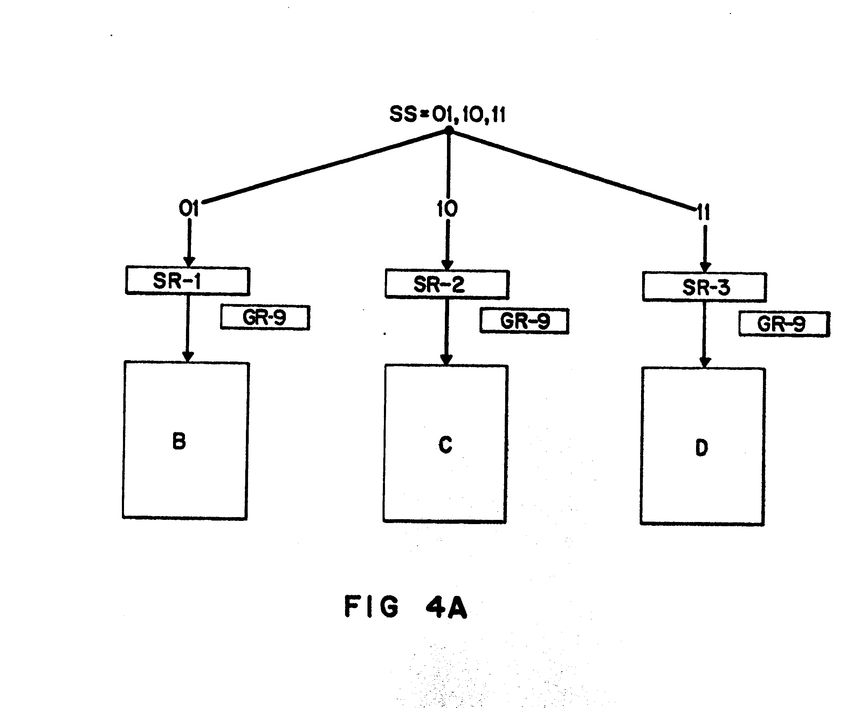

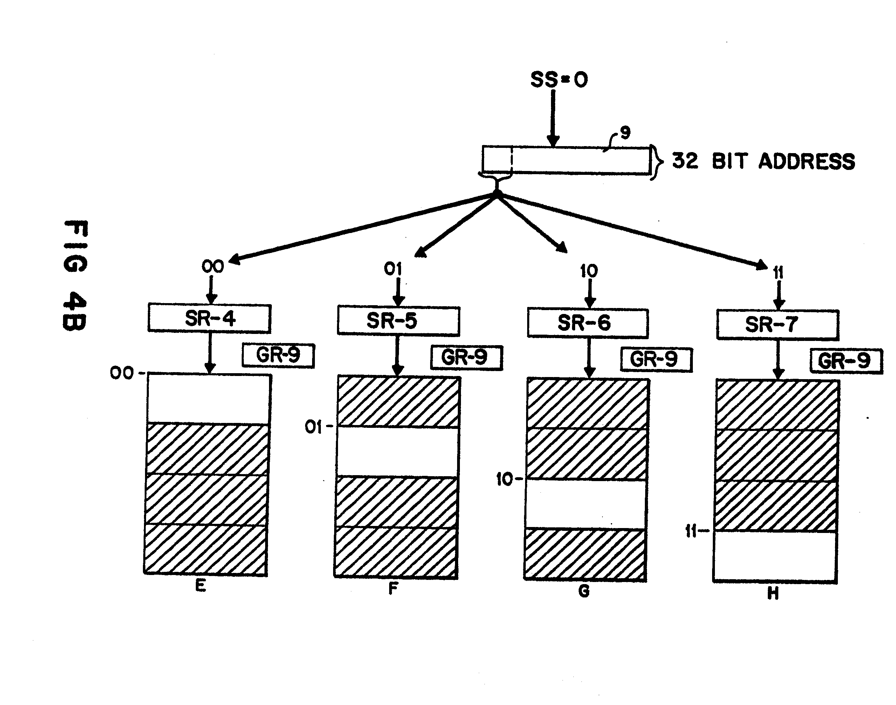

Figures 3A and 4A depict the portion of the flow chart which is performed in the event that ss is nonzero and a long pointer is to be used. The contents of space registers SR-1, SR-2 and SR-3 may be changed by an unprivileged program to contain the space identifiers of various address spaces. An ss value of 01, 10 or 11 designates the contents of either SR-1, SR-2 or SR-3 as the space identifier portion of the long pointer to access the three spaces A, B and C shown in Figure 4A.

The execution of a memory reference instruction using a long pointer requires two MOVE instructions in addition to the memory reference instruction itself. For example, a LOAD operation using a long pointer to load a data word from a source register, s, to a desired memory location in the specified address space B shown in Figure 4A requires:

        MOVE data, SR-1

        MOVE data, GR-9

        LOAD (ss=01, b=GR-9), s

The first MOVE instruction moves the 32 bit space identifier from memory or from the instruction stream into space register SR-1. The second MOVE instruction moves the base address from memory or from the instruction stream into general register GR-9. The LOAD instruction may then be executed using the space identifier stored in SR-1 (ss=01) and the base address stored in GR-9 as the long pointer.

The source address, s, for the instruction is provided in field 15. Thus, the use of a long pointer requires a total of three instructions for the execution of a memory reference instruction. Additionally, a correct space identifier portion of the long pointer must be moved to a register before execution of the memory reference instruction.

Figure 3B shows the steps performed in the execution of a memory reference instruction with the use of a short pointer. If ss=00, the upper two bits of the base address are used to designate which of space registers SR-4 through SR-7 is to be accessed. Each of the space registers SR-4 through SR-7 contains a 32 bit space identifier for a desired specific address space E-H as shown in Figure 4B. The contents of registers SR-4 through SR-7 may only be changed by a privileged program and are thereby protected from incorrect modifications. In this way, continuing access to the desired address spaces E-H may be guaranteed without the necessity of respecifying the space identifier each time a memory reference instruction occurs.

The entire 32 bit base address contained in base register 9 is used to address a specific memory location within the specified address space E-H. But, since the upper two bits of the base address are limited to only one of the four possible combinations for each of the address spaces, only a single quadrant within each address space is accessed. Thus, a $2^{32}$ bit long pseudo-space containing the

5

first quadrant of space E, the second quadrant of space F, the third quadrant of space G and the fourth quadrant of space H is generated.

The execution of a memory reference instruction using a short pointer requires only two instructions rather than the three required for use with a long pointer. For example, a LOAD operation to load a data word from a source register, s, to a desired memory location in the specified address space E shown in Figure 4B requires only:

MOVE data, GR-9

LOAD (ss=00, b=GR-9), s

The MOVE instruction moves the base address from memory or from the instruction stream into general register GR-9. The LOAD instruction then uses the upper two bits (00) of the base address and the contents of SR-4 to specify address space E. The entire 32 bits of the base address specify the specific memory location although the restriction of the upper two bits to 00 forces the memory location to be in the first quadrant of address space E. The field 15 provides the source address, s, for the LOAD operation. Thus, execution of the memory reference instruction with a short pointer requires one less instruction than execution with a long pointer and registers other than the space registers are not needed.

In an exemplary system the type of information stored in each of the four quadrants of the pseudo-space is predetermined. The first quadrant contains only program code and the contents of space register SR-4 containing the space identifier for the first quadrant may be changed by any unprivileged program. In this way, the program code for various programs may be located at the same location within each of the various address spaces for ease of scheduling and accessing. Access to each of the programs is easily performed by changing the space identifier contents of register SR-4. The second quadrant contains program data and the space identifier contents of register SR-5 may only be changed by a privileged program so that the data is protected from other than the correct program code. The third quadrant may contain other important code and the space identifier contents of register SR-6 may only be changed by a privileged program. The fourth quadrant contains the operating system and the contents of its associated register SR-7 are protected.

## Claims

We claim:

1. A method for accessing a desired memory location in a desired address space, comprising the steps of:

reading a memory reference instruction;

examining a space specifier in the memory reference instruction;

reading a base address if the space specifier has a short value;

reading an identifier portion of the base address;

accessing a space register identified by the identifier portion of the base address;

accessing the desired address space from the contents of the space register; and

accessing the desired memory location from the base address.

2. A method as in claim 1, wherein the base address is contained in a base register identified by a base field of the memory reference instruction.

3. A method as in claim 2, wherein the identifier portion of the base address includes the most significant bit of the base address.

4. A method as in claim 3, wherein the identifier portion of the base address comprises the two most significant bits of the base address.

5. A method as in claim 4, wherein the space specifier is a two bit field within the memory reference instruction.

8

6. A method as in claim 5, wherein the short value is 00.

7. A method as in claim 6, wherein the memory reference instruction is either a LOAD or a STORE instruction.

8. A computer when programmed to operate according to the method as claimed in any of claims 1 to 7.

BASE REGISTERS 5

9

13 11

SPACE REGISTER 7

SR-0
SR-1
SR-2
SR-3
SR-4
SR-5
SR-6
SR-7

PROCESSOR 1

MEMORY 3

FIG 1

1/6

21

11   13   15   17   19

| OPCODE | b | t | ss | d |
|--------|---|---|----|---|

6 ─── 5 ─── 5 ─── 2 ─── 14

FIG 2

FIG 3A

FIG 3B

SS=01,10,11

01                    10                    11

SR-1                  SR-2                  SR-3

GR-9                  GR-9                  GR-9

B                     C                     D

FIG 4A

5/6

0208429

FIG 4B

SS=0

9  32 BIT ADDRESS

00    01    10    11

SR-4   SR-5   SR-6   SR-7

GR-9   GR-9   GR-9   GR-9

00    01    10    11

E    F    G    H

6/6

0208429